# EUROPEAN PATENT SPECIFICATION

(11) **EP 3 301 789 B1**
(45) Date of publication and mention of the grant of the patent: **25.11.2020**
(21) Application number: 17203767.3
(22) Date of filing: 24.01.2012
(51) Int. Cl.: H02K 5/22, H02K 11/00, H02K 9/14, H02K 5/18, H02K 11/02, H02K 11/33

(54) **ELECTRIC ROTARY MACHINE ASSEMBLY**
ELEKTRISCHE DREHMASCHINENANORDNUNG
ENSEMBLE FORMANT MACHINE ROTATIVE ÉLECTRIQUE

(30) Priority: 27.01.2011 JP 2011015258
(43) Date of publication of application: 04.04.2018
(62) Divisional of application: 12152248.6
(73) Proprietor: Hitachi Industrial Equipment Systems Co., Ltd., Tokyo 101-0022 (JP)
(72) Inventor: SAITO, Kenichi, Chiyoda-ku, Tokyo 100-8220, (JP); KOBAYASHI, Takashi, Chiyoda-ku, Tokyo 100-8220, (JP); SUZUKI, Toshifumi, Chiyoda-ku, Tokyo 100-8220, (JP); SUZUKI, Norinaga, Chiyoda-ku, Tokyo 100-8220, (JP); SANO, Masahiro, Chiyoda-ku, Tokyo 100-8220 (JP); TASHIMA, Kiyomi, Chiyoda-ku, Tokyo 100-8220, (JP); OIKAWA, Kunihiko, Chiyoda-ku, Tokyo 100-8220, (JP); KOBAYASHI, Tatsuya, Chiyoda-ku, Tokyo 100-8220, (JP); ICHIKI, Kazutaka, Chiyoda-ku, Tokyo 100-8220, (JP); ONO, Koji, Chiyoda-ku, Tokyo 100-8220, (JP)
(74) Representative: Mewburn Ellis LLP

(56) References cited:
- WO-A1-2005/043720
- JP-U- H0 574 168
- US-A1- 2010 303 648

## Description

The present invention relates to an electric rotary machine to be used in driving various kinds of equipments, such as, for driving a pump installed in an outdoor, etc., and in particular it relates to an electric rotary machine assembly, being constructed in one (1) body, including therein an inverter (hereinafter, may be also called, "a power converter"), as well as, various kinds of circuit boards, and also further a noise filter and a capacitor, etc., and having the structure being suitable to be installed alone or independently in the outdoor (e.g., environment resistant structure).

For example, for a pump to be installed alone or independently in the outdoor, an electric rotary machine for driving the pump is also stalled alone or independently. For that reason, it is common for such electric rotary machine, to be constructed in the form, so-called an electric rotary machine assembly, i.e., mounting an inverter for supplying driving current to that electric rotary machine and a micro-computer, in an inside of a main body of the electric rotary machine, thereby to build up a wired/wireless interface between the inside and the outside, as well as, a control board for conducting various kinds of driving controls (hereinafter, may be also called, "a control and interface board", and further including a noise filter attached with a surge resistant circuit and/or a DC reactor, in other words, mounting them in all-in-one form.

For example, in the following Patent Document 1 is already known a motor integrated with a control apparatus, building up the main body of the electric rotary machine and various kinds of control apparatuses in one (1) body.

Also, with the following Patent Document 2, an electric rotary machine assembly and a pump apparatus are already known, fixing an inverter on a side portion of the main body of the electric rotary machine for cooling that inverter effectively, and being constructed in such that an air from an outside can be guided to cooling fins of the inverter by the cooling fan, which is attached at an end of a rotary shaft of that electric rotary machine.

WO 2005/043720 A1 discloses a variable speed electric motor including a motor assembly, a cooling fan to direct cooling air flow over or through the motor assembly; a casing enclosing the motor assembly, and a controller circuit for controlling in a selectively variable manner the speed of rotation of the rotor.

### <Prior Art Documents>

### <Patent Documents>

Patent Document 1: Japanese Patent Laying-Open No. Hei 11-27903 (1999); and
Patent Document 2: Japanese Patent Laying-Open No.2009-278807 (2009).

However, with such electric rotary machine assembly according to the conventional technology, as was mentioned above, it has the following problems to be dissolved. Thus, among various kinds of parts, which are mounted in the main body of the electric rotary machine, in particular, the power converter includes power switching elements (for example, IGBTs, etc.) for building up the inverter, and therefore the heat generation thereof is large. For that reason, as is disclosed in the Patent Document 1 mentioned above, if that device is mounted inside a cylindrical case, which is disposed on the rotary shaft thereof, piling thereon, at an end of the electric rotary machine, it is difficult to radiate the heats generated by that inverter (i.e., the power switching elements thereof) to the outside with certainty. Also, with such the structure of guiding a part of an airflow formed by the cooling fan of the main body of the electric rotary machine, as is disclosed in the Patent Document 2 mentioned above, it is also difficult to radiate the heats generated by that inverter (i.e., the power switching elements thereof) to the outside with certainty.

Thus, the present invention is accomplished by taking the problems to be dissolved in the conventional technologies mentioned above into the consideration thereof, and as will be apparent from the embodiments, which will be mentioned below in the details thereof, an object thereof is to provide the structure of an electric rotary machine, applying a housing, which forms cooling fins on an outer periphery thereof, directly, as a cooling portion for heat generating part, such as, an inverter, etc., and thereby being suitable to be constructed in one (1) body, together with a power converter, including the inverter, as well as, various kinds of circuit boards, and further a noise filter and a capacitor.

According to the present invention there is provided an electric rotary machine as specified in claim 1.

The electric rotary machine according to the present invention may optionally be as specified in claim 2.

According to the present invention mentioned above, it is possible to provide a practically superior electricrotary machine, applying the housing, which forms cooling fins on the outer periphery thereof, directly, as the cooling portion for a heat generating part, such as, the inverter, etc., and thereby being suitable to be constructed together with the power converter, including the inverter, as well as, various kinds of circuit boards, and further the noise filter and the capacitor, in one (1) body.

Those and other objects, features and advantages of the present invention will become more readily apparent from the following detailed description when taken in conjunction with the accompanying drawings wherein:
Fig. 1 is an outer-look perspective view for showing the entire configuration of an electric rotary machine assembly for driving an outdoor-installed pump, according to an embodiment of the present invention;
Fig. 2 is an exploded perspective view for showing the entire configuration of an electric rotary machine portion, which is built within a cover of the electric rotary machine assembly mentioned above;
Fig. 3 is an exploded perspective view for showing each of components when storing the electric rotary machine shown in Fig. 2 into the cover;
Fig. 4 is a perspective view including a cross-section of part thereof, for explaining other example of the positional relationships between a power converter attached on a housing and a stator (or, an armature), within the electric rotary machine assembly mentioned above; and
Fig. 5 is a perspective view for showing other example of a core for building up the stator (or the armature), within the electric rotary machine assembly mentioned above.

Hereinafter, embodiments according to the present invention will be fully explained by referring to the attached drawings.

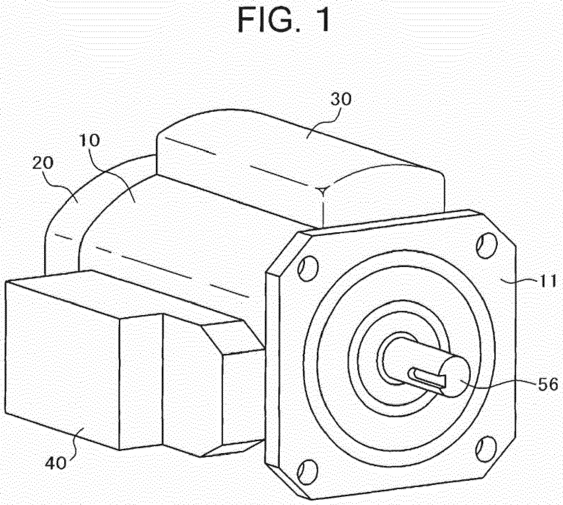

First of all, Fig. 1 shows the entire configuration of an electric rotary machine assembly for use in driving an outdoor-installed pump, for example, according to an embodiment of the present invention. Thus, in this figure, a reference numeral 10 depicts a cover for covering over an outer periphery of a main body of an electric rotary machine, and it has an outer configuration of a cylindrical shape. This cover 10 is formed in the predetermined shape, through a press process of a plate-like member of resonance (sympathetic vibration) inhibiting material. In more details, on an inner side of the cover is attached a sound absorbing or sound proofing material, or a vibration proofing or absorbing material, etc., and thereby enabling to restrain or suppress noises and/or vibration.

On one end portion of the cylindrical cover 10 mentioned above in the axial direction thereof (at the depth side in the figure) is attached a cooling cover 20 having a built-in centrifugal fan 21 therein, which will be explained later, and on the other end portion thereof (at the foreground side in the figure) is attached an end bracket 11 of the electric rotary machine, which will be mentioned later. Further, on an outer peripheral surface of the cylindrical cover 10 mentioned above are attached a case (e.g., a power converter case) 30 for storing therein a power converter, which will be explained later, and a terminal box (e.g., a noise filter built-in terminal box) 40 for storing a noise filter therein.

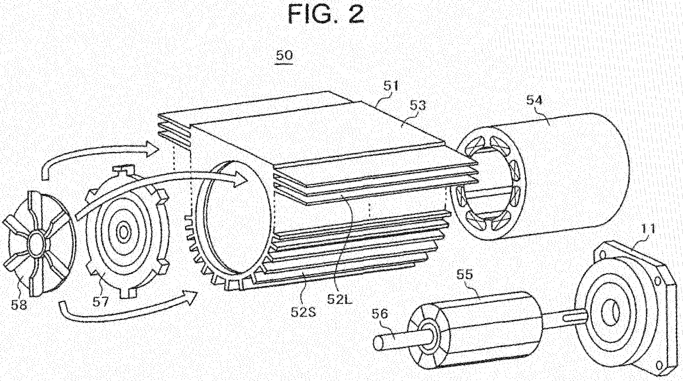

Following to the above, in Fig. 2 attached herewith is shown the entire structures of the electric rotary machine portion 50 to be built in an inside of the cover 10 mentioned above, in the form of an exploded view. However, in the present example, there is shown a permanent-magnet type electric rotary machine, as an example thereof. In this figure, a reference numeral 51 depicts so-called a housing (or, also called, "a frame"), having a cylinder-like shape, approximately, and this housing 51 is formed through an extruding of a material superior in heat transfer (thermal conductivity) thereof, such as, aluminum, etc., for example. Also, on this housing 51 are formed a large number of cooling fins 52L and 52S, extending in parallel with one other along the rotating axis of the cylindrical shape. Also, in a part of the outer peripheral surface of this housing 51 (i.e., in an upper portion in the figure) is formed a plane 53 having a relatively large area, to be attached with the above-mentioned power converter (i.e., the power converter case) 30 thereon, and on the periphery thereof are formed the cooling fins 52, being relatively large (e.g., extending long), in the horizontal direction.

Further, in an inside of this cylindrical-shaped housing 51 is inserted an armature for building up a stator 54 of the permanent-magnet type electric rotary machine mentioned above, to be fixed therein, and also in a cylindrical inner space of the armature 54 is inserted a rotor 55, which is built up with plural numbers of permanent magnets arranged in a cylindrical manner, to be freely rotatable through a predetermined gap. Further, a reference numeral 56 in the figure depicts a rotating axis (e.g., a shaft), which is formed with the rotor 55 in one (1) body, and through that shaft, a rotary driving force of the electric rotary machine is transmitted to the equipment to be driven, such as, the pump, etc., for example. Also, a reference numeral 57 in the figure depicts an end bracket, which is attached on an end portion of the housing 51, at the other side opposite to the end bracket 11 mentioned above, and further a reference numeral 58 depicts the centrifugal fan, to be attached on the rotating axis (the shaft) 56), on an outside of that end bracket 57.

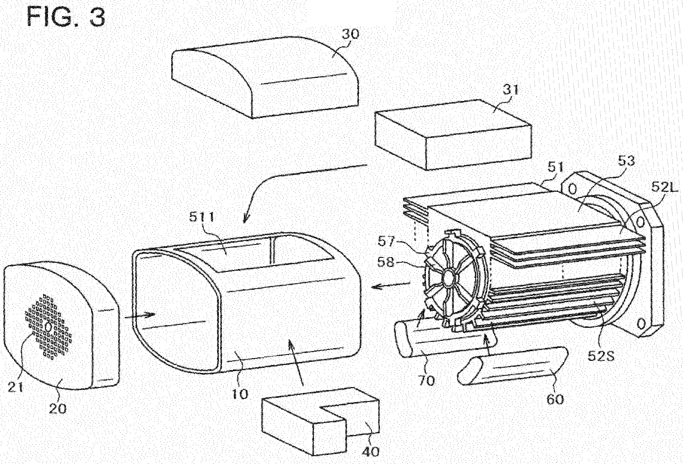

Further, in Fig. 3 attached herewith are shown each of parts when the electric rotary machine 50 mentioned above is stored in an inside of the cover 10 shown in Fig. 1 mentioned above, in the form of an exploded view thereof . Thus, the electric rotary machine 50 is attached (or fixed) with a control and interface board case 60 and a smoothing capacitor case 70, each being formed to be arcuate in an outer cross-section thereof, in a part of the outer peripheral surface of the housing 51 thereof, for example, the part where the relatively short cooling fins 52 are formed in a periphery of the lower portion thereof, in the example shown in the figure, and thereafter it is inserted into the inside of the cover 10 mentioned above (see an arrow shown in the figure) . Also, on plane 53 of the housing 51 of the electric rotary machine 50 is attached the power converter 31 having power switching elements (for example, IGBTs, etc.), i.e., being heat generating elements building up the inverter, through an opening portion 511 formed in a part of the cover 10, and thereafter, the cover 30 (e.g., the power converter cover) for protection thereof is attached from an outside thereof (see an arrow shown in the figure) . Further, in a part of the outer peripheral surface of the housing 51 is attached the terminal box (e.g., the noise filter built-in terminal box) 40 (see an arrow shown in the figure). And, on the other end (e.g., the left end in the figure) of the housing 51 in attached the cooling cover 20 mentioned above. Further, a reference numeral 21 in the figure depicts small apertures, which are formed to be mesh-like, around a central portion of a wall surface of that cooling cover 20, in a large number thereof, for taking in an outer air therethrough.

Namely, with the electric rotary machine assembly including the main body of the electric rotary machine and peripheral devices thereof, with an aid of the rotating axis (e.g., the shaft) 56 rotating accompanying with driving of the electric rotary machine, the centrifugal fan 58 attached at the end thereof rotates around, so as to guide the air from the outside into an inside of the cover 10, i.e., flowing among the cooling fins 52 formed on the outer peripheral surface of the housing 51 in the large number thereof, to conduct heat-exchange therebeween (see outlined or hollowed arrows in Fig. 2 mentioned above), and thereafter, it flows out into the outside thereof passing through gaps defined between the end bracket 11 at the other end. Thus, with an aid of the airflow generated by the centrifugal fan 58 rotating, the housing 51 is cooled, on the outer peripheral surface of which are formed the large number of the cooling fins 52.

Further, the power converter 31 has a large amount of heat generation, since it comprises the heat generating elements, i.e., the power switching elements, in an inside thereof, for building up the inverter, as was mentioned above. However, according to the present invention, as was mentioned above, the power converter 31 is attached, directly, on a part of the housing 51, which is provided on an outer periphery of the stator 54 in one (1) body for discharging the heat generation of the electric rotary machine into the outside thereof, i.e., on the plane portion 53 for use of attachment thereof. With this, the heat generation within the power converter 31 is transferred to that housing 51, together with heat generation of the electric rotary machine (in particular, the heat generation in the armature thereof), and is transferred to an outer air, effectively, through the cooling fins 52 formed of the material superior in the heat transfer, alighting in parallel with in the large number thereof, on an entire body of the outer peripheral surface thereof. In other words, it is possible to discharge the heat generated of the power converter 31, effectively, together with the heat generation of the electric rotary machine , into the outside thereof, and thereby to achieve a cooling effect preferable to the power converter.

In particular, with the embodiment mentioned above, on a periphery of the plane surface 53 for use of attaching formed in an upper portion of the cylindrical housing 51, on which the power converter 31 is disposed, since the relatively large (i.e., extending long) cooling fins 52 are formed in the horizontal direction, it is possible to cool the heat generation of the power converter 31 together with the heat generation of the electric rotary machine, effectively.

Also, as was mentioned above, according to the present invention, also with the control and interface board case 60 and the capacitor case 70, since they are attached (fixed) in a part of the outer peripheral surface of the housing 51, it is possible to discharge the heat generations within those cases into the outside thereof, effectively, through the cooling fins 52 formed on the outer periphery of the housing 51, in the similar manner as was mentioned above.

However, the control and interface board case 60 stores a communication interface board, together with a controller (for example, a microcomputer for use of control), in an inside thereof, and is injected a resin material in the inside thereof; therefore being superior in resistances against and environment and shocks thereon. And, with attaching this control and interface board case 60 in a part of the electric rotary machine, in addition to the drive control of the outdoor-installed pump, it is also possible to obtain a communication function between the outside through a wireless/wired manner. Also, with this, for example, with installing a pressure sensor and/or a flow sensor, etc., on the control and interface board, it is possible to obtain an automatic control with using those amounts as feedback signals, and further to achieve a centralized management and/or an integrated energy saving system, etc., by transmitting (communicating) them to a support center. Thus, with this, it is possible to achieve a drive management and/or an energy saving drive, etc., of the outdoor-installed pump, as well as, a remote monitoring control and/or a centralized management, and further to achieve a system made up with plural numbers of pumps.

Also, the capacitor case 70 stores a smoothing capacitor for building up a portion (or a part) of a inverter circuit of the power converter 31 mentioned above, in an inside thereof, and the resin material or the like is injected in an inside thereof, in the similar manner to that mentioned above, thereby obtaining the resistances against and environment and shocks thereon. And, although the explanation was given that a DC reactor building up a portion of the inverter is assembled in a part of the power converter mentioned above, in the present embodiment; however also this DC reactor may be attached in a part of the outer peripheral surface of the housing 51, being received within a case for exclusive use thereof, in the similar manner.

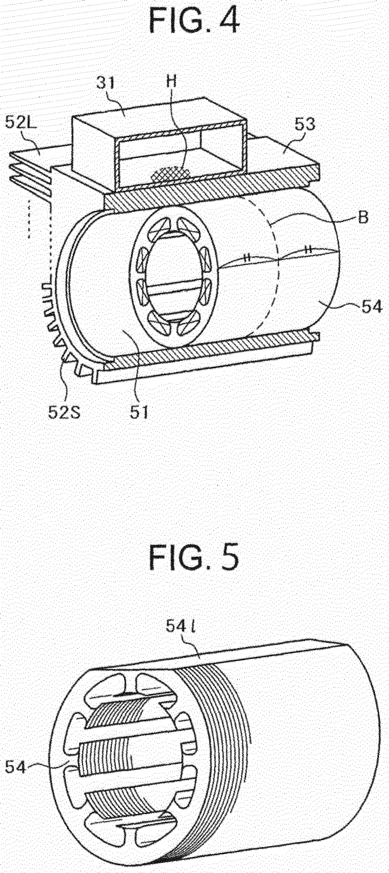

In addition thereto, according to the present invention, in the place of the embodiment mentioned above, the heat-generating portion (a meshed portion in the figure) H within the power converter 31 may be disposed, as is shown in Fig. 4 attached herewith, on the plane portion 53 of the cylindrical housing 51 mentioned above, on a central axis of rotation thereof, deviating from the position of a central portion of the stator (the armature) 54, i.e., the heat generating portion on a side of the electric rotary machine (shown by a broken line B in the figure), such as, at the position close to a side of the centrifugal fan 21, which is stored within the cooling cover 20 , for example. With this, effective cooling can be achieved through dispersion of the heat generating portions, without centralizing thereof.

Further, as the stator (e.g., the armature) 54 may be applied so-called a cut core, cutting out a part of the outer periphery thereof, as is shown in Fig. 5 attached herewith, i.e., cutting out a portion (a cutout portion 541) in the vicinity of the plane portion of the housing 51, on which the power converter 30 is attached. With doing this, the power converter 30 as the heat-generating portion can be separated, thermally, from the stator (e.g., the armature) 54 by the cutout portion, therefore it is possible to achieve an effective cooling, separating from an absorption of the heat by the housing 51, respectively.

Namely, with the electric rotary machine assembly, according to the present invention, as is apparent from the explanation given in the above, it is possible to provide the electric rotary machine assembly, applying the housing, which forms cooling fins on the outer periphery thereof, directly, as the cooling portion for a heat generating part, such as, the inverter, etc., and thereby being suitable to be constructed together with the power converter, including the inverter, as well as, various kinds of circuit boards, and further the noise filter and the capacitor, in one (1) body; i.e., being practically superior.

In the embodiment mentioned above, although the explanation was made that the electrical rotary machine assembly for use in driving the outdoor-installed pump is constructed with the permanent-magnet type electric rotary machine; however, the present invention should not be restricted to this, and therefore it would be apparent for the person skilled in the art that the assembly may be constructed with an electric rotary machine of a type other than that, and the similar effect (s) can be obtained with that. Further, in the embodiment mentioned above, although the explanation was given that the cover 10 is formed extending so as to cover the entire body of the electric rotary machine portion 50; however with this, the present invention should not be restricted to this, for example, the cover 10 may be extended to cover about a half of the electric rotary machine portion 50 in the longitudinal direction thereof, and also in such case, the similar effect(s) as was mentioned above can be obtained.

The present invention may be embodied in other specific forms without departing from the scope of the invention, which is defined by the appended claims.

## Claims

1. An electric rotary machine assembly comprising: an electric rotary machine (50) having:
a housing (51);
a stator (54) attached on the housing (51)
a rotor (55) fixed on a rotating shaft (56);
bearings for supporting the rotating shaft (56);
brackets (11, 57) for supporting the bearings;
a cooling fan (58) disposed on anti-load side in the axial direction of the housing (51);
a power converter (31) for supplying driving current to an armature of the electric rotary machine;
a control and interface board (60) for inputting and/or outputting between an outside through a wireless/ wired manner and also for controlling an operation of said electric rotary machine through said power converter; and
a plurality of cooling fins (52L, 52S) formed on an outer circumferential periphery of the housing (51),
**characterized in that**:
the electric rotary machine further comprises a substantially cylindrical cover (10) for forming an airflow path by covering the outer peripheral surface of the housing (51) and guiding airflow generated by the cooling fan (58) to the outer peripheral surface of the housing (51);
said power converter (31) is disposed the outer circumferential periphery of said housing (51), on a plane portion (53) , and
said control and : interface board is disposed at a different position from said power converter (31) between the outer circumferential periphery of said housing (51) and said cover (10).

2. The electric rotary machine (50), as described in claim 1, wherein the signals which said control and : interface board communicate include the signal detected with a sensor.

## Patentansprüche

1. Elektrische Rotationsmaschinenanordnung, die Folgendes umfasst: eine elektrische Rotationsmaschine (50), die Folgendes aufweist:
ein Gehäuse (51);
einen Stator (54), der an dem Gehäuse (51) befestigt ist;
einen Rotor (55), der an einer Rotationswelle (56) fixiert ist;
Lager, die die Rotationswelle (56) lagern;
Lagerkonsolen (11, 57) zum Abstützen der Lager;
einen Kühllüfter (58), der auf einer Nicht-Belastungsseite in axialer Richtung des Gehäuses (51) angeordnet ist;
einen Leistungswandler (31) zur Zufuhr von Antriebsstrom an einen Anker der elektrischen Rotationsmaschine;
eine Steuer- und Schnittstellenkarte (60) zur Eingabe und/oder Ausgabe von/an außen auf drahtlose/drahtgebundene Weise und auch zur Steuerung eines Betriebs der elektrischen Rotationsmaschine über den Leistungswandler;
und
eine Vielzahl von Kühlrippen (52L, 52S), die auf einem Außenumfang des Gehäuses (51) ausgebildet sind;
**dadurch gekennzeichnet, dass**:
die elektrische Rotationsmaschine ferner eine im Wesentlichen zylinderförmige Abdeckung (10) zur Ausbildung eines Luftstromwegs durch Abdecken der Außenumfangsoberfläche des Gehäuses (51) und zum Leiten des durch den Kühllüfter(58) erzeugten Luftstroms auf die Außenumfangsoberfläche des Gehäuses (51) umfasst;
der Leistungswandler (31) auf dem Außenumfang des Gehäuses (51) auf einem planen Abschnitt (53) angeordnet ist, und
die Steuer- und Schnittstellenkarte an einer anderen Position als der Leistungswandler (31) zwischen dem Außenumfang des Gehäuses (51) und der Abdeckung (10) angeordnet ist.

2. Elektrische Rotationsmaschine (50) nach Anspruch 1, wobei die Signale, die die Steuer- und Schnittstellenkarte kommuniziert, das mit einem Sensor detektierte Signal umfasst.

## Revendications

1. Ensemble formant machine rotative électrique, comprenant : une machine rotative électrique (50) ayant :
une enceinte (51) ;
un stator (54) fixé sur l'enceinte (51) ;
un rotor (55) fixé sur un arbre rotatif (56) ;
des roulements destinés à supporter l'arbre rotatif (56) ;
des fixations (11, 57) destinées à supporter les roulements ;
un ventilateur de refroidissement (58) disposé côté anti-charge dans la direction axiale de l'enceinte (51) ;
un convertisseur de puissance (31) destiné à fournir un courant d'entraînement à une armature de la machine rotative électrique ;
une carte de commande et d'interface (60) destinée à recevoir et/ou émettre depuis un extérieur en Wi-Fi/de manière câblée, et également à contrôler une opération de ladite machine rotative électrique par le biais dudit convertisseur de puissance ;
et
une pluralité d'ailettes de refroidissement (52L, 52S) formées sur une périphérie circonférentielle extérieure de l'enceinte (51),
**caractérisé en ce que** :
la machine rotative électrique comprend en outre un capot sensiblement cylindrique (10) destinée à former un trajet de flux d'air en couvrant la surface périphérique extérieure de l'enceinte (51) et à guider le flux d'air généré par le ventilateur de refroidissement (58) vers la surface périphérique extérieure de l'enceinte (51) ;
ledit convertisseur de puissance (31) est disposé sur la périphérie circonférentielle extérieure de ladite enceinte (51), sur une partie plane (53), et ladite carte de commande et d'interface est disposée à un emplacement différent dudit convertisseur de puissance (31) entre la périphérie circonférentielle extérieure de ladite enceinte (51) et ledit capot (10).

2. Machine rotative électrique (50) selon la revendication 1, dans laquelle les signaux que ladite carte de commande et d'interface communiquent comprennent le signal détecté avec un capteur.
